(19) Europäisches Patentamt
European Patent Office
Office européen des brevets

(11) **EP 3 031 568 A1**

(12) **EUROPEAN PATENT APPLICATION**
published in accordance with Art. 153(4) EPC

(43) Date of publication:
**15.06.2016 Bulletin 2016/24**

(21) Application number: **14834592.9**

(22) Date of filing: **09.06.2014**

(51) Int Cl.:
**B23K 35/30** (2006.01)          **B23K 9/16** (2006.01)
**B23K 9/23** (2006.01)           **B23K 35/368** (2006.01)
**C22C 38/00** (2006.01)          **C22C 38/40** (2006.01)

(86) International application number:
**PCT/JP2014/065251**

(87) International publication number:
**WO 2015/019698 (12.02.2015 Gazette 2015/06)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **07.08.2013 JP 2013164606**

(71) Applicant: **Kabushiki Kaisha Kobe Seiko Sho (Kobe Steel, Ltd.)**
**Kobe-shi, Hyogo 651-8585 (JP)**

(72) Inventors:
• **MIYATA, Minoru**
  **Kanagawa 251-8551 (JP)**
• **SUZUKI, Reiichi**
  **Kanagawa 251-8551 (JP)**
• **YAMAZAKI, Kei**
  **Kanagawa 251-8551 (JP)**
• **NAGAI, Takuya**
  **Kanagawa 251-8551 (JP)**

(74) Representative: **Müller-Boré & Partner**
**Patentanwälte PartG mbB**
**Friedenheimer Brücke 21**
**80639 München (DE)**

(54) **FLUX-CORED WIRE FOR ADDITIONAL WELDING, AND WELDING METHOD**

(57)    Provided are a flux-cored wire and a welding method which, in additional welding, make it possible to improve the fatigue strength of the weld while keeping the breakage resistance of the weld metal satisfactory. The flux-cored wire for additional welding comprises a steel sheath filled with a flux, and is used in additional welding at a toe of the weld metal used in main welding.

The flux-cored wire contains, with respect to the total mass of the wire, 0.2-1.0 mass% Si and 3.0-10.0 mass% Mn, and the contents of C, P, S, and the sum of Cr and Ni have been regulated to 0.1 mass% or less, 0.03 mass% or less, 0.03 mass% or less, and 3.8 mass% or less, respectively.

EP 3 031 568 A1

**Description**

Technical Field

The present invention relates to a flux-cored wire for additional welding at a weld metal toe of main welding and a welding method. More specifically, the present invention relates to a flux-cored wire for additional welding, the wire having a configuration of a steel sheath filled with flux, and a welding method for performing additional welding with the wire.

Background Art

In steel structures, additional beads are sometimes formed at weld toes of main welding for the purpose of, for example, enhancement of fatigue strength of weld joints and reduction of residual stress (refer to Patent Literatures 1 to 3). As welding materials used for such welding for forming additional beads (additional welding), in general, materials that have the same compositions as in main welding are used. For example, Patent Literature 1 discloses that additional welding is performed to form a weld metal having a Ni content of 4 to 12 mass% and a Cr content of 7 to 15 mass%.
Patent Literature 2 describes a welding method in which, for a weld metal formed by additional welding, the C, Cr, Ni, Si, Mn, Mo, and Nb contents are specified and the Ni and Cr contents are increased, so that the martensitic transformation starting temperature is adjusted to be 120°C to 400°C. Patent Literature 3 proposes a welding material for additional welding, the welding material having contents of C: 0.20 mass% or less, Cr: 5.0 to 18.0 mass%, and Ni: 3.0 to 15.0 mass%, the remainder being Fe and unavoidable impurities.

Citation List

Patent Literature

PTL 1: Japanese Unexamined Patent Application Publication No. 2003-275890
PTL 2: Japanese Unexamined Patent Application Publication No. 2003-251489
PTL 3: Japanese Unexamined Patent Application Publication No. 2004-42133

Summary of Invention

Technical Problem

Such existing welding materials for additional welding and weld metals formed of the welding materials in Patent Literatures 1 to 3 can provide the effects of enhancement of fatigue strength and reduction of residual stress. However, because of the high Cr and Ni contents, the weld metals excessively harden and have low cracking resistance and low toughness, which is problematic. In addition, Cr and Ni are expensive and addition of large amounts of Cr and Ni results in an increase in the production cost, which is also problematic. For these reasons, there has been a demand for a welding material for additional welding in which the amounts of Cr and Ni added are reduced.
Accordingly, a main object of the present invention is to provide a flux-cored wire and a welding method in which, in additional welding, the fatigue strength of the weld can be enhanced while sufficiently high cracking resistance of the weld metal is ensured.

Solution to Problem

In order to achieve the object, the inventors of the present invention thoroughly performed experiments and studies. As a result, the inventors have found that a welding material having a high Mn content allows reduction in the amounts of Cr and Ni added, sufficiently high cracking resistance and toughness of the weld metal in additional welding, and enhancement of the fatigue strength of the weld. Thus, the inventors have accomplished the present invention.
Specifically, a flux-cored wire for additional welding according to the present invention includes a steel sheath filled with flux, wherein, relative to a total mass of the wire, the wire contains Si: 0.2 to 1.0 mass% and Mn: 3.0 to 10.0 mass%, contents are restricted as below, C: 0.1 mass% or less, P: 0.03 mass% or less, S: 0.03 mass% or less, and Cr and/or Ni: 3.8 mass% or less in total, and the wire is used for additional welding at a weld metal toe of main welding. The flux-cored wire according to the present invention may contain, relative to the total mass of the wire, Ni: 0.5 to 3.8 mass% and Mn: 3 to 7 mass%.

The wire may have a composition that satisfies Formula 1 below where, relative to the total mass of the wire, the Mn content (mass%) is represented by [Mn] and the Ni content (mass%) is represented by [Ni].

The Cr content relative to the total mass of the wire may be 1.0 mass% or less.

The flux-cored wire according to the present invention may further contain, relative to the total mass of the wire, Al: 0.1 to 0.5 mass%.

$$[\text{Formula 1}]$$

$$3 < [\text{Mn}] + 0.5 \times [\text{Ni}] < 6$$

The present invention provides a welding method for performing additional welding, with the above-described flux-cored wire for additional welding, at a weld metal toe of main welding, the weld metal toe being made of a steel at least containing Mn: 0.5 to 2.0 mass% and Ni: 3.5 mass% or less (exclusive of 0).

In the welding method according to the present invention, the additional welding may be performed by, for example, gas-shielded arc welding using a shielding gas containing 10 vol% or more of $CO_2$.

Advantageous Effects of Invention

According to the present invention, a specific amount of Mn is contained. As a result, without addition of large amounts of Ni and Cr, in additional welding, the fatigue strength of the weld can be enhanced while sufficiently high cracking resistance of the weld metal is ensured.

Brief Description of Drawings

[Fig. 1] Fig. 1 is a perspective view illustrating a double fillet weld joint used in Examples.
[Fig. 2] Fig. 2 is a side view illustrating a fatigue test method.

Description of Embodiments

Hereinafter, embodiments for carrying out the present invention will be described in detail. However, the present invention is not limited to the embodiments described below.

(Flux-cored wire)

A flux-cored wire according to an embodiment is a steel sheath filled with flux and the wire contains, relative to the total mass of the wire, 0.2 to 1.0 mass% of Si and 3.0 to 10.0 mass% of Mn. In addition, contents are restricted as follows: 0.1 mass% or less of C, 0.03 mass% or less of P, 0.03 mass% or less of S, and 3.8 mass% or less of Cr and/or Ni in total. For the flux-cored wire according to the embodiment, in addition to the above-described components, a specific amount of Al can be added.

The flux-cored wire according to the embodiment is not particularly limited in terms of outer diameter, and the outer diameter is, for example, 0.9 to 1.6 mm. The flux filling ratio can be set to a desired value as long as the components of the wire satisfy the above-described ranges. The flux filling ratio is preferably 8 to 25 mass% relative to the total mass of the wire from the standpoint of wire drawability and usability (such as feedability) during welding.

Hereafter, the reasons for placing numerical limitations on components of the flux-cored wire according to the embodiment will be described.

[Si: 0.2 to 1.0 mass%]

Si exerts the effects of enhancing the strength of weld metals and smoothing the shape of bead toes to reduce stress concentration. However, when the Si content is less than 0.2 mass%, these effects are not sufficiently provided. On the other hand, when the Si content is more than 1.0 mass%, grain boundary segregation occurs, which tends to result in hot cracking. Accordingly, the Si content relative to the total mass of the wire is set to 0.2 to 1.0 mass%.

Specific examples of the Si source for the flux-cored wire according to the embodiment include Si contained in the steel sheath and Si sources contained in the flux that are Fe-Si, Fe-Si-Mn, Fe-Si-Mg, REM-Ca-Si, Fe-Si-B, $SiO_2$ $ZrSiO_3$, $K_2SiF_6$, and $MgSiO_3$.

[Mn: 3 to 10 mass%]

Mn exerts the effects of enhancing the hardenability, decreasing the martensitic transformation starting temperature (Ms point) of weld metals, and imparting compressive residual stress to weld metal toes. Also, an appropriate amount of Mn added exerts the effect of fixing S, which affects the hot cracking resistance of weld metals, as MnS to suppress hot cracking. However, when the Mn content is less than 3 mass%, the effects are not sufficiently provided. When the Mn content is more than 10 mass%, the weld metal excessively hardens, which tends to result in occurrence of hot cracking and causes a decrease in the toughness. Accordingly, the Mn content relative to the total mass of the wire is set to 3 to 10 mass%.

Specific examples of the Mn source for the flux-cored wire according to the embodiment include Mn contained in the steel sheath and Mn sources contained in the flux that are Fe-Mn, Si-Mn, and $MnO_2$.

[C: 0.1 mass% or less]

C exerts the effects of enhancing the strength of weld metals, enhancing the hardenability, and decreasing the Ms point of weld metals. However, C is an element that tends to induce hot cracking. Specifically, when the C content is more than 0.1 mass%, hot cracking tends to occur in weld metals. Accordingly, the C content relative to the total mass of the wire is restricted to 0.1 mass% or less.

[P: 0.03 mass% or less]

P is also an element that tends to induce hot cracking. When the P content is more than 0.03 mass%, hot cracking tends to occur in weld metals. Accordingly, the P content relative to the total mass of the wire is restricted to 0.03 mass% or less.

[S: 0.03 mass% or less]

S is, as with P above, an element that tends to induce hot cracking. When the S content is more than 0.03 mass%, hot cracking tends to occur in weld metals. Accordingly, the S content relative to the total mass of the wire is also restricted to 0.03 mass% or less.

[Cr and Ni: 3.8 mass% or less in total]

Cr exerts the effects of decreasing the Ms point of weld metals and enhancing the fatigue strength of welds. However, since Cr-containing iron alloys form harder weld metals, addition of a large amount of Cr causes the weld metals to excessively harden, resulting in low cracking resistance and low toughness. Similarly, Ni also exerts the effect of decreasing the Ms point of weld metals. Addition of an appropriate amount of Ni can further enhance the fatigue strength of welds. However, addition of a large amount of Ni results in low cracking resistance and low toughness of weld metals.

Specifically, when the total content of Cr and Ni relative to the total mass of the wire is more than 3.8 mass%, the weld metals have low cracking resistance and low toughness and intended characteristics are not obtained. Accordingly, when Cr and/or Ni is added for the flux-cored wire according to the embodiment, the total content of Cr and/or Ni is set to 3.8 mass% or less. As long as this range is satisfied, both of Cr and Ni may be contained; or, one of Cr and Ni may be contained; or, neither Cr nor Ni may be contained.

Compared with the case of adding Ni, addition of Cr tends to result in low cracking resistance and low toughness of weld metals. Accordingly, the Cr content relative to the total mass of the wire is preferably restricted to 1.0 mass% or less.

On the other hand, when Ni is deliberately added, the Ni content is preferably set to 0.5 to 3.8 mass%, and the Mn content is preferably set to 3 to 7 mass%. This provides weld metals that are excellent in terms of both toughness and hot cracking resistance.

Also, when Ni is deliberately added, the relationship between the Mn content and the Ni content preferably satisfies Formula 2 below. In Formula 2 below, [Mn] represents the Mn content (mass%) relative to the total mass of the wire and [Ni] represents the Ni content (mass%) relative to the total mass of the wire. As indicated by Formula 2 below, the sum of the Mn content and 1/2 of the Ni content is set to be within the range of more than 3 and less than 6. As a result, weld metals excellent in terms of hot cracking resistance can be obtained even by high-current and high-speed welding while sufficiently high toughness of weld metals is ensured.

## [Formula 2]

$$3 < [Mn] + 0.5 \times [Ni] < 6$$

[Al: 0.1 to 0.5 mass%]

Al exerts the effect of allowing uniform formation of slag over bead surfaces. However, Al causes a slight increase in the Ms point of weld metals. Accordingly, as needed, Al is added for the flux-cored wire according to the embodiment. In this case, when the Al content is less than 0.1 mass%, the above-described effect due to addition is not provided. When the Al content is more than 0.5 mass%, weld metals have low toughness and the increase in the Ms point results in low fatigue strength of welds. Accordingly, when Al is added, the Al content relative to the total mass of the wire is set to 0.1 to 0.5 mass%. As a result, slag can be uniformly formed over the whole surface of a welding bead.

[Remainder]

The remainder of the component composition of the flux-cored wire according to the embodiment is Fe and unavoidable impurities. The unavoidable impurities of the flux-cored wire according to the embodiment are, for example, Nb and V. When the above-described elements are added as oxides or nitrides, the remainder of the flux-cored wire according to the embodiment contains O or N. For the flux-cored wire according to the embodiment, in addition to the above-described components, for example, Mo, Ti, Zr, Mg, K, Ca, Na, and F may be added.

(Welding method)

The flux-cored wire according to the embodiment is used for additional welding at a weld metal toe of main welding. In this case, the composition of the weld metal of the main weld is not particularly limited. However, the flux-cored wire according to the embodiment is particularly suitable when the weld metal of the main weld is a steel at least containing Mn: 0.5 to 2.0 mass% and Ni: 3.5 mass% or less (exclusive of 0). When the Mn content and the Ni content are within these ranges, reduction of the effects due to base material dilution is suppressed and a weld joint excellent in terms of cracking resistance and fatigue strength can be formed.

When the weld metal of the main weld has a Mn content of less than 0.5 mass% or a Ni content of 0 mass%, the fatigue strength may be insufficient. When the weld metal of the main weld has a Mn content of more than 2.0 mass%, the cracking resistance may lower. When the weld metal of the main weld has a Ni content of more than 3.5 mass%, the cracking resistance of the weld metal may lower and the production cost is increased.

The conditions for additional welding are not particularly limited. Normally, gas-shielded arc welding is performed. In this case, the shielding gas preferably contains 10 vol% or more of $CO_2$ and, more preferably, 100% $CO_2$ gas is used. Use of a shielding gas containing $CO_2$ allows suppression of incomplete fusion.

As has been described in detail, the flux-cored wire according to the embodiment has a higher Mn content than the existing wires. As a result, even in spite of reduction of Ni and Cr contents, in additional welding, the fatigue strength of the weld can be enhanced while sufficiently high cracking resistance of the weld metal is ensured.

EXAMPLES

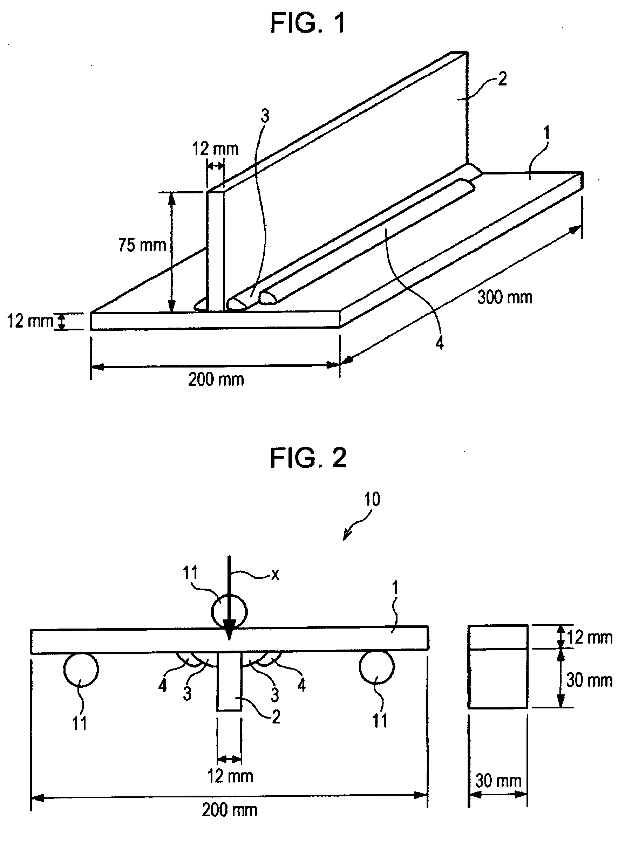

Hereinafter, advantages of the present invention will be specifically described with reference to Examples according to the present invention and Comparative examples. Fig. 1 is a perspective view illustrating a double fillet weld joint used for evaluations. In EXAMPLES, sheaths made of a steel having a composition described in Table 1 below, were filled with flux to produce flux-cored wires of Examples and Comparative examples. Each wire was formed so as to have a diameter of 1.2 mm and a flux filling ratio of 12 to 18 mass% relative to the total mass of the wire.

[Table 1]

| Composition (mass%) | | | | | |
|---|---|---|---|---|---|
| C | Si | Mn | P | S | Remainder |
| 0.016 | 0.01 | 0.19 | 0.005 | 0.005 | Fe and unavoidable impurities |

Subsequently, base materials 1 and 2 having a composition described in Table 2 below were subjected to main welding at a welding current of 280 A and at a welding speed of 45 cm/min such that the lower leg length was 6 mm. After that, at the weld toes of weld metals 3 of the main welding, additional welding was performed with each of the flux-cored wires of Examples and Comparative examples, with $CO_2$ (100%) serving as the shielding gas, at a welding current of 280 A, and at a welding speed of 45 cm/min such that the lower leg length was 12 mm. Thus, a double fillet weld joint illustrated in Fig. 1 was produced.

[Table 2]

| Composition (mass%) | | | | | | | |
|---|---|---|---|---|---|---|---|
| C | Si | Mn | P | S | Cr | Ni | Remainder |
| 0.15 | 0.28 | 1.46 | 0.005 | 0.005 | 0.02 | 0.01 | Fe and unavoidable impurities |

<Slag formation>

Each of the produced joints was visually observed for the state of slag on the surfaces of weld metals 4 of the additional welding. On the basis of the results, joints in which the surfaces of the weld metals 4 of additional welding took on a uniform color were evaluated as A and joints in which the surfaces of the weld metals 4 of additional welding took on an uneven color were evaluated as B.

<Fatigue test>

Fig. 2 is a side view illustrating a fatigue test method. The fatigue strength was evaluated by cutting out a test piece 10 illustrated in Fig. 2 from a double fillet weld joint illustrated in Fig. 1 and subjecting the test piece 10 to a three-point bending fatigue test under a partial fluctuating load. At this time, a 200 kN fatigue tester (PA24901) manufactured by TAKES GROUP LTD. was used. The test conditions were as follows: the ambient temperature was room temperature and the distance between fulcrums 11 was 150 mm; the load was controlled in accordance with a sine wave at a frequency of 15 Hz and at a stress ratio of 0.1 (partial fluctuating load). Arrow x in Fig. 2 indicates the direction in which the load was applied.

The number of cycles was set to 500 thousand and the fatigue strength at 500 thousand cycles was determined as the fatigue strength. On the basis of the results, test pieces having a fatigue strength of 300 MPa or more were evaluated as A (Excellent), test pieces having a fatigue strength of 250 MPa or more and less than 300 MPa were evaluated as B (Good), and test pieces having a fatigue strength of less than 250 MPa were evaluated as D (Poor).

<Cracking resistance>

For the cracking resistance of weld metals, weld metals were subjected to a FISCO test according to JIS Z3155 and evaluated on the basis of the results. At this time, the welding current was set to 280 A and the welding speeds were set to 40, 50, and 70 cm/min. The thus-welded samples were subjected to an X-ray radiographic test. Samples that cracked even for 40 cm/min were evaluated as D (Poor); samples that did not crack only for 40 cm/min were evaluated as C (Fair); samples that did not crack for speeds of 50 cm/min or lower were evaluated as B (Good); and samples that did not crack even for 70 cm/min were evaluated as A (Excellent).

<Toughness>

For the toughness of all-weld metal, an all-weld metal impact test at 0°C was performed in accordance with JIS Z3111 and, on the basis of the results, the samples were evaluated. Samples having an impact property of 60 J or more at 0°C were evaluated as A (Excellent), and samples having an impact property of 47 J or more and less than 60 J were evaluated as B (Good). Normally, the mechanical properties of weld joints are ensured by main welds thereof and hence additional welds are not required to have properties equivalent to those of main welds. Because an impact property of less than 47 J but 10 J or more at 0°C is on the practical level, in EXAMPLES, samples having an impact property of 10 J or more and less than 47 J were evaluated as C (Fair). Samples having an impact property of less than 10 J at 0°C were evaluated as D (Poor) because weld metals excessively harden and may crack during press straightening.

The results are summarized in Table 3 and Table 4 below. The remainder of the wire composition of additional welding in Table 3 and Table 4 below is Fe and unavoidable impurities. Cr and Ni are often present as unavoidable impurities in steel sheaths. For example, Comparative example No. 39 in Table 4 has a Cr content of 0.07 mass% and Examples Nos. 21 and 22 have a Ni content of 0.03 mass%, which were added as impurities and were not deliberately added. Thus, the Cr content and the Ni content of wires for additional welding in Table 3 and Table 4 include Cr and Ni added as unavoidable impurities.

[Table 3]

| No. | Wire composition (mass%) | | | | | | | | | Weld metal of main welding (mass%) | | Evaluation results | | | |
|---|---|---|---|---|---|---|---|---|---|---|---|---|---|---|---|
| | C | Si | Mn | P | S | Cr | Ni | Al | [Mn] + 0.5 × [Ni] | Mn | Ni | Slag formation | Fatigue strength | Toughness vE0°C | Cracking resistance |
| 1 | 0.03 | 0.2 | 3.1 | 0.012 | 0.012 | 0.03 | 0.01 | 0.005 | 3.1 | 0.4 | 0.005 | B | B | A | A |
| 2 | 0.01 | 0.9 | 3.0 | 0.013 | 0.013 | 0.05 | 0.01 | 0.007 | 3.0 | 0.2 | 0.006 | B | B | A | A |
| 3 | 0.06 | 0.3 | 5.1 | 0.009 | 0.014 | 0.04 | 0.01 | 0.006 | 5.1 | 0.2 | 0.005 | B | B | A | A |
| 4 | 0.07 | 1.0 | 5.3 | 0.015 | 0.012 | 0.02 | 0.01 | 0.006 | 5.3 | 0.3 | 0.005 | B | B | A | A |
| 5 | 0.02 | 0.2 | 9.9 | 0.012 | 0.015 | 0.03 | 0.01 | 0.006 | 9.9 | 0.4 | 0.006 | B | B | A | C |
| 6 | 0.09 | 1.0 | 10.0 | 0.011 | 0.013 | 0.04 | 0.01 | 0.006 | 10.0 | 0.3 | 0.006 | B | B | A | C. |
| 7 | 0.04 | 0.3 | 4.5 | 0.013 | 0.012 | 0.05 | 0.30 | 0.005 | 4.7 | 0.4 | 0.005 | B | B | A | A |
| 8 | 0.02 | 0.3 | 4.4 | 0.012 | 0.015 | 0.05 | 3.50 | 0.006 | 6.2 | 0.4 | 0.005 | B | A | A | B |
| 9 | 0.01 | 0.2 | 5.2 | 0.013 | 0.013 | 0.05 | 0.01 | 0.1 | 5.2 | 0.4 | 0.005 | A | B | A | A |
| 10 | 0.03 | 0.3 | 4.9 | 0.011 | 0.013 | 0.04 | 0.01 | 0.4 | 4.9 | 0.4 | 0.006 | A | B | A | A |
| 11 | 0.01 | 0.2 | 6.5 | 0.011 | 0.01 | 0.03 | 0.01 | 0.005 | 6.5 | 0.5 | 0.005 | B | B | B | C |
| 12 | 0.02 | 0.2 | 4.0 | 0.014 | 0.007 | 0.05 | 0.01 | 0.006 | 4.0 | 2.0 | 0.007 | B | A | A | A |
| 13 | 0.03 | 0.3 | 7.0 | 0.010 | 0.014 | 0.03 | 0.01 | 0.005 | 7.0 | 0.5 | 3.5 | B | A | B | C |
| 14 | 0.04 | 0.3 | 4.0 | 0.008 | 0.014 | 0.05 | 0.01 | 0.005 | 4.0 | 2.0 | 3.5 | B | A | A | A |
| 15 | 0.03 | 0.2 | 5.2 | 0.012 | 0.013 | 0.04 | 0.50 | 0.005 | 5.5 | 0.4 | 0.005 | B | A | A | C |
| 16 | 0.03 | 0.2 | 9.7 | 0.014 | 0.015 | 0.03 | 1.50 | 0.006 | 10.5 | 0.3 | 0.006 | B | A | A | B |
| 17 | 0.02 | 0.4 | 6.0 . | 0.014 | 0.012 | 0.04 | 3.50 | 0,005 | 7.8 | 0.3 | 0.006 | B | A | A | A |
| 18 | 0.03 | 0.3 | 4.3 | 0.013 | 0.012 | 0.33 | 1.00 | 0.006 | 4.8 | 0.3 | 0.005 | B | A | A | A |
| 19 | 0.04 | 0.4 | 4.2 | 0.014 | 0.011 | 0.55 | 0.50 | 0.003 | 4.5 | 0.5 | 0.004 | B | A | B | A |
| 20 | 0.03 | 0.5 | 4.5 | 0.013 | 0.011 | 0.95 | 0.03 | 0.003 | 4.5 | 0.4 | 0.005 | B | A | B | A |
| 21 | 0.05 | 0.4 | 5.2 | 0.014 | 0.014 | 0.05 | 0.03 | 0.004 | 5.2 | 0.5 | 0.005 | B | B | A | A |

Examples

7

(continued)

| | No. | C | Si | Mn | P | S | Cr | Ni | Al | [Mn] + 0.5 × [Ni] | Mn | Ni | Slag formation | Fatigue strength | Toughness vE0°C | Cracking resistance |
|---|---|---|---|---|---|---|---|---|---|---|---|---|---|---|---|---|
| | | | | Wire composition (mass%) | | | | | | | Weld metal of main welding (mass%) | | Evaluation results | | | |
| | 22 | 0.04 | 0.4 | 6.5 | 0.015 | 0.01 | 0.04 | 0.50 | 0.1 | 6.8 | 0.3 | 0.006 | A | A | A | B |
| | 23 | 0.03 | 0.3 | 6.7 | 0.016 | 0.012 | 0.05 | 1.50 | 0.5 | 7.5 | 0.4 | 0.005 | A | A | A | B |
| | 24 | 0.05 | 0.3 | 5.3 | 0.012 | 0.011 | 0.03 | 3.50 | 0.3 | 7.1 | 0.3 | 0.006 | A | A | A | B |

[Table 4]

| | No. | Wire composition of additional welding (mass%) | | | | | | | | [Mn] + 0.5 × [Ni] | Weld metal of main welding (mass%) | | Evaluation results | | | |
|---|---|---|---|---|---|---|---|---|---|---|---|---|---|---|---|---|
| | | C | Si | Mn | P | S | Cr | Ni | Al | | Mn | Ni | Slag formation | Fatigue strength | Toughness vE0°C | Cracking resistance |
| Examples | 25 | 0.05 | 0.3 | 5.2 | 0.013 | 0.011 | 0.05 | 0.70 | 0.3 | 5.6 | 0.5 | 3.4 | A | A | A | A |
| | 26 | 0.05 | 0.2 | 3.5 | 0.013 | 0.011 | 0.05 | 1.00 | 0.3 | 4.0 | 0.5 | 2.5 | A | A | A | A |
| | 27 | 0.04 | 0.3 | 4.5 | 0.012 | 0.012 | 0.06 | 1.30 | 0.2 | 5.2 | 0.7 | 1.5 | A | A | A | A |
| | 28 | 0.07 | 0.3 | 5.7 | 0.014 | 0.13 | 0.05 | 1.30 | 0.2 | 6.4 | 1.0 | 2.0 | A | A | A | B |
| | 29 | 0.05 | 0.3 | 5.7 | 0.015 | 0.012 | 0.04 | 3.70 | 0.2 | 7.6 | 1.9 | 0.5 | A | A | A | B |
| | 30 | 0.04 | 0.3 | 4.6 | 0.014 | 0.015 | 0.50 | 3.50 | 0.005 | 6.4 | 0.3 | 0.006 | B | A | B | D |
| | 31 | 0.05 | 0.4 | 7.0 | 0.013 | 0.015 | 0.05 | 4.50 | 0.006 | 9.3 | 0.4 | 0.005 | B | A | B | D |
| | 32 | 0.03 | 0.1 | 4.5 | 0.011 | 0.012 | 0.05 | 0.01 | 0.005 | 4.5 | 0.3 | 0.005 | B | D | B | B |
| | 33 | 0.05 | 1.2 | 7.0 | 0.012 | 0.011 | 0.03 | 0.01 | 0.006 | 7.0 | 0.4 | 0.005 | B | B | B | D |
| | 34 | 0.03 | 0.3 | 2.7 | 0.014 | 0.011 | 0.04 | 0.01 | 0.006 | 2.7 | 0.4 | 0.006 | B | D | B | B |
| | 35 | 0.05 | 0.2 | 10.3 | 0.011 | 0.012 | 0.05 | 0.01 | 0.005 | 10.3 | 0.3 | 0.005 | B | B | C | D |
| | 36 | 0.02 | 0.1 | 2.8 | 0.011 | 0.011 | 0.04 | 0.01 | 0.005 | 2.8 | 0.3 | 0.006 | B | D | B | B |
| Comparative examples | 37 | 0.03 | 1.2 | 10.2 | 0.012 | 0.015 | 0.05 | 0.01 | 0.006 | 10.2 | 0.4 | 0.005 | B | B | C | D |
| | 38 | 0.02 | 0.1 | 10.2 | 0.012 | 0.012 | 0.06 | 0.01 | 0.005 | 10.2 | 0.4 | 0.006 | B | B | C | D |
| | 39 | 0.03 | 1.1 | 2.8 | 0.011 | 0.015 | 0.07 | 0.01 | 0.005 | 2.8 | 0.4 | 0.005 | B | B | B | D |
| | 40 | - | - | - | - | - | - | - | - | - | 0.4 | 0.01 | - | D | D | - |
| | 41 | - | - | - | - | - | - | - | - | - | 0.7 | 1.5 | - | D | - | - |
| | 42 | 0.03 | 0.3 | 0.9 | 0.013 | 0.014 | 7.5 | 13.50 | 0.005 | 7.7 | 0.4 | 0.005 | B | B | D | D |
| | 43 | 0.04 | 0.3 | 1.3 | 0.012 | 0.014 | 8.0 | 2.50 | 0.005 | 2.6 | 0.4 | 0.005 | B | B | D | D |
| | 44 | 0.03 | 0.4 | 1.4 | 0.012 | 0.012 | 2.5 | 8.20 | 0.005 | 5.5 | 0.4 | 0.005 | B | B | D | D |
| | 45 | 0.04 | 0.3 | 1.5 | 0.140 | 0.012 | 10.5 | 12.30 | - | 7.7 | 0.4 | 0.005 | B | B | D | D |

As described in Table 4 above, in Comparative examples Nos. 30 and 31 in which the total content of Cr and Ni was more than the range of the present invention, the weld metals had poor cracking resistance. In Comparative example No.32 in which the Si content was less than the range of the present invention and Comparative example No.34 in which the Mn content was less than the range of the present invention, the welds had poor fatigue strength. On the other hand, in Comparative example No.33 in which the Si content was more than the range of the present invention and Comparative example No.35 in which the Mn content was more than the range of the present invention, the weld metals had poor cracking resistance.

In Comparative example No. 36 in which both of the Si content and the Mn content were less than the ranges of the present invention, the weld had poor fatigue strength. In Comparative example No. 37 in which both of the Si content and the Mn content were more than the ranges of the present invention and Comparative example No.38 in which the Si content was less than the range of the present invention and the Mn content was more than the range of the present invention, the weld metals had poor cracking resistance and the toughness was relatively low. On the other hand, in Comparative example No.39 in which the Si content was more than the range of the present invention and the Mn content was less than the range of the present invention, the weld metal had poor cracking resistance.

In Comparative example Nos. 40 and 41 in which additional welding was not performed, the welds had poor fatigue strength. Comparative example Nos. 40 and 41 were not subjected to the other evaluations because additional welding was not performed. In Comparative example Nos. 42 to 45 in which additional welding was performed with existing flux-cored wires having high Cr and Ni contents, the weld metals had poor toughness and poor cracking resistance.

In contrast, Example Nos. 1 to 29 in which flux-cored wires produced so as to satisfy the ranges of the present invention were used provided good results for all evaluations of slag formation, fatigue strength of weld, toughness of weld metal, and cracking resistance. In particular, Example Nos. 25 to 27 in which flux-cored wires having an Al content of 0.1 to 0.5 mass% were used provided excellent results for all the items.

The results have demonstrated that, according to the present invention, in additional welding, the fatigue strength of the weld can be enhanced while sufficiently high cracking resistance of the weld metal is ensured.

Reference Signs List

    1, 2 base material
    3 weld metal of main welding
    4 weld metal of additional welding
    10 test piece
    11 fulcrum
    x load application direction

**Claims**

1.   A flux-cored wire for additional welding, the wire comprising a steel sheath filled with flux,
     wherein, relative to a total mass of the wire,
     the wire contains
     Si: 0.2 to 1.0 mass% and
     Mn: 3 to 10 mass%,
     contents are restricted as below
     C: 0.1 mass% or less,
     P: 0.03 mass% or less,
     S: 0.03 mass% or less, and
     Cr and/or Ni: 3.8 mass% or less in total, and
     the wire is used for additional welding at a weld metal toe of main welding.

2.   The flux-cored wire for additional welding according to Claim 1, wherein the wire contains, relative to the total mass of the wire,
     Ni: 0.5 to 3.8 mass%, and
     Mn: 3 to 7 mass%.

3.   The flux-cored wire for additional welding according to Claim 1 or 2, wherein the wire satisfies Formula (1) below where, relative to the total mass of the wire, the Mn content (mass%) is represented by [Mn] and the Ni content (mass%) is represented by [Ni].

$$3 < [\mathrm{Mn}] + 0.5 \times [\mathrm{Ni}] < 6 \qquad (1)$$

4. The flux-cored wire for additional welding according to Claim 1, wherein the Cr content relative to the total mass of the wire is 1.0 mass% or less.

5. The flux-cored wire for additional welding according to Claim 1, wherein the wire further contains, relative to the total mass of the wire, Al: 0.1 to 0.5 mass%.

6. A welding method for performing additional welding, with the flux-cored wire for additional welding according to any one of Claims 1 to 5,
at a weld metal toe of main welding, the weld metal toe being made of a steel at least containing Mn: 0.5 to 2.0 mass% and Ni: 3.5 mass% or less (exclusive of 0).

7. The welding method according to Claim 6, wherein the additional welding is gas-shielded arc welding using a shielding gas containing 10 vol% or more of $CO_2$

# FIG. 1

# FIG. 2

## INTERNATIONAL SEARCH REPORT

| International application No. |
|---|
| PCT/JP2014/065251 |

A. CLASSIFICATION OF SUBJECT MATTER
*B23K35/30*(2006.01)i, *B23K9/16*(2006.01)i, *B23K9/23*(2006.01)i, *B23K35/368*
(2006.01)i, *C22C38/00*(2006.01)i, *C22C38/40*(2006.01)i

According to International Patent Classification (IPC) or to both national classification and IPC

B. FIELDS SEARCHED

Minimum documentation searched (classification system followed by classification symbols)
B23K35/30, B23K9/16, B23K9/23, B23K35/368, C22C38/00, C22C38/40

Documentation searched other than minimum documentation to the extent that such documents are included in the fields searched
Jitsuyo Shinan Koho        1922–1996   Jitsuyo Shinan Toroku Koho   1996–2014
Kokai Jitsuyo Shinan Koho  1971–2014   Toroku Jitsuyo Shinan Koho   1994–2014

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2012-115877 A  (Kobe Steel, Ltd.), 21 June 2012 (21.06.2012), claim 1; paragraphs [0001], [0044] to [0045], [0068], [0069]; table 1 & CN 102485409 A | 1-7 |
| X | JP 2013-18012 A  (Nippon Steel & Sumitomo Metal Corp.), 31 January 2013 (31.01.2013), claims 1, 5; table 1, A09; table 7, B06; paragraph [0069] (Family: none) | 1-4,6,7 |
| A | | 5 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 25 June, 2014 (25.06.14) | 08 July, 2014 (08.07.14) |

| Name and mailing address of the ISA/ Japanese Patent Office | Authorized officer |
|---|---|
| Facsimile No. | Telephone No. |

Form PCT/ISA/210 (second sheet) (July 2009)

## INTERNATIONAL SEARCH REPORT

International application No.

PCT/JP2014/065251

C (Continuation). DOCUMENTS CONSIDERED TO BE RELEVANT

| Category* | Citation of document, with indication, where appropriate, of the relevant passages | Relevant to claim No. |
|---|---|---|
| X<br>A | JP 2013-91082 A (Nippon Steel & Sumikin Welding Co., Ltd.),<br>16 May 2013 (16.05.2013),<br>claims; paragraph [0043]; table 2<br>(Family: none) | 1-4,6<br>5,7 |
| P,X | JP 2013-173179 A (Kobe Steel, Ltd.),<br>05 September 2013 (05.09.2013),<br>claims; paragraphs [0055], [0116]; table 1B,<br>no.F45<br>& WO 2013/129284 A | 1-7 |
| P,X<br>P,A | JP 2014-18852 A (Kobe Steel, Ltd.),<br>03 February 2014 (03.02.2014),<br>claims; paragraph [0045]; table 3, W12; table 5<br>(Family: none) | 1,3,4,6<br>2,5,7 |
| P,A | JP 2013-226577 A (Nippon Steel & Sumikin Welding Co., Ltd.),<br>07 November 2013 (07.11.2013),<br>claims; paragraphs [0040] to [0045]<br>(particularly, table 1, no.2, 7, 18, 21)<br>(Family: none) | 1-7 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003275890 A
- JP 2003251489 A
- JP 2004042133 A